# EUROPEAN PATENT SPECIFICATION

(11) **EP 2 100 771 B1**
(45) Date of publication and mention of the grant of the patent: **10.08.2016**
(21) Application number: 09003672.4
(22) Date of filing: 13.03.2009
(51) Int. Cl.: B60Q 1/14, F21V 14/08, F21S 8/10

(54) **Vehicle headlight apparatus and method for controlling same**
Fahrzeugscheinwerfervorrichtung und Verfahren zu deren Steuerung
Phare de véhicule et son procédé de contrôle

(30) Priority: 13.03.2008 JP 2008064940
(43) Date of publication of application: 16.09.2009
(73) Proprietor: Koito Manufacturing Co., Ltd., Tokyo 108-8711 (JP)
(72) Inventor: Mochizuki, Kiyotaka, Shizuoka-shi Shizuoka (JP); Tatara, Naoki, Shizuoka-shi Shizuoka (JP)
(74) Representative: Hoffmann Eitle

(56) References cited:
- EP-A2- 1 513 103
- FR-A1- 2 855 245
- JP-A- 7 069 125
- JP-A- 7 101 291
- JP-A- H06 275 104
- US-A- 3 743 886
- US-A1- 2001 040 810
- US-A1- 2002 003 473

## Description

### BACKGROUND OF THE INVENTION

### Field of the Invention

Apparatuses and methods consistent with the present invention relate to vehicle headlights and, more particularly, to a vehicle headlight apparatus which is capable of adjusting illumination.

### Description of Related Art

In a vehicle headlight apparatus, in general, a low beam mode and a high beam mode are provided and can be switched. The low beam mode illuminates a near area at a certain illuminance. A light distribution in the low beam mode is set in order to reduce glare experienced by oncoming vehicles and vehicles traveling ahead. Such a low beam mode is used mainly in driving in an urban area. In contrast, the high beam mode illuminates a large area and a distant place in the forward direction at a relatively high illuminance. The high beam mode is used mainly in driving at high speeds on a road where only a small number of oncoming vehicles and vehicles traveling ahead are met. Thus, the high beam mode provides better visibility to a driver than the low beam mode. Nevertheless, a disadvantage arises with the high beam mode in that glare is caused in vehicle drivers and pedestrians in front of the vehicle.

A number of techniques to reduce glare have been proposed. For example, Japanese Patent Unexamined Publication JP-A-6-267304 describes a related art technique in which when another vehicle is detected, a position of a cutline of the light distribution is partly changed in order to avoid projecting light onto a region where the detected vehicle is located. As another example, Japanese Patent Unexamined Publication JP-A-2004-161082 describes a related art technique in which a voltage applied for a high beam is controlled or alternatively the optical axis of each headlight is adjusted, so that a target voltage for a high beam is changed in accordance with a relative distance between a vehicle and another vehicle in order to prevent glare for the driver of an oncoming vehicle.

In JPH07101291, the luminosity of a high beam pattern is increased in accordance with the inter-vehicular distance. In JPH06275104, the direction of the range of illumination of a headlamp is controlled based on an estimated distance between vehicles.

Nevertheless, the above-mentioned related art techniques have a disadvantage in that they reduce glare for an oncoming vehicle, but do not improve visibility for the driven vehicle..

### SUMMARY OF THE INVENTION

Illustrative aspects of the present invention provide a headlamp and control technique for simultaneously improving visibility and reducing glare. According to an illustrative aspect of the present invention, there is provided a headlight apparatus for a vehicle, the headlight apparatus comprising:
a plurality of headlight units which are arranged in the vehicle, each of the headlight units being adapted to project light in a plurality of distribution patterns comprising a first light distribution pattern and a second light distribution pattern; and a control unit which is configured to control the plurality of headlight units to project the light in accordance with a distance from the vehicle to an in-front vehicle. If the distance is smaller than a threshold value, the control unit controls a position of an upper end of the first light distribution pattern to gradually move upwards.based on the increase of the distance, and if the distance is greater than the threshold value, the control unit forms the second light distribution pattern that illuminates a region including a portion above the first light distribution pattern, and controls an illuminance of the second light distribution pattern.

According to another illustrative aspect of the present invention, there is provided a control method for controlling a vehicle headlight apparatus comprising a plurality of headlamp units, the control method comprising: obtaining a distance from a vehicle to an in-front vehicle; if the distance is smaller than a threshold value, controlling the plurality of headlamp units to move a position of an upper end of a light distribution pattern produced by the headlamp units toward upward based on an increase of the distance, and if the distance is greater than the threshold value, controlling the plurality of headlamp units to change an illuminance of the light distribution pattern such that the illuminance is increased in accordance with an increase of the distance.

### BRIEF DESCRIPTION OF THE DRAWINGS

FIG. 1 is a schematic diagram showing an external appearance of a front part of an automobile that employs a vehicle headlight apparatus according to an exemplary embodiment of the present invention;
FIG. 2 is an example perspective view of an external appearance of a headlight unit;
FIG. 3(a) is a schematic sectional view showing a vicinity of a low-beam lamp unit according to a first exemplary embodiment of the present invention;
FIG. 3(b) is a diagram showing a light distribution pattern of the low-beam lamp unit shown in FIG. 3(a);
FIG. 4(a) is a schematic sectional view showing a vicinity of a high-beam lamp unit according to the first exemplary embodiment;
FIG. 4(b) is a diagram showing an example of a light distribution pattern of the high-beam lamp unit shown in FIG. 4(a);
FIG. 5 is a control block diagram describing an example configuration of a vehicle and a vehicle headlight apparatus according to the first exemplary embodiment;
FIG. 6 is a flow chart showing a control method for a vehicle headlight apparatus according to the first exemplary embodiment;
FIG. 7 is a diagram schematically showing a relationship between a distance from an in-front vehicle and a cutoff line height;
FIG. 8 is a diagram showing a relationship between the distance from the in-front vehicle and an illuminance in a region above an H-line (horizontal line);
FIG. 9 is a schematic sectional view of a headlight unit according to a second exemplary embodiment of the present invention;
FIG. 10 is a control block diagram describing a configuration of a vehicle and a vehicle headlight apparatus according to the second exemplary embodiment; and
FIG. 11 is a flow chart showing a control method for a vehicle headlight apparatus according to the second exemplary embodiment.

### DETAILED DESCRIPTION OF EXEMPLARY EMBODIMENTS OF THE

### PRESENT INVENTION

Exemplary embodiments of the present invention will now be described below in detail with reference to the drawings. In the description of the drawings, like components are designated by like numerals. Thus, duplicated description is omitted in some cases.

### (First exemplary embodiment)

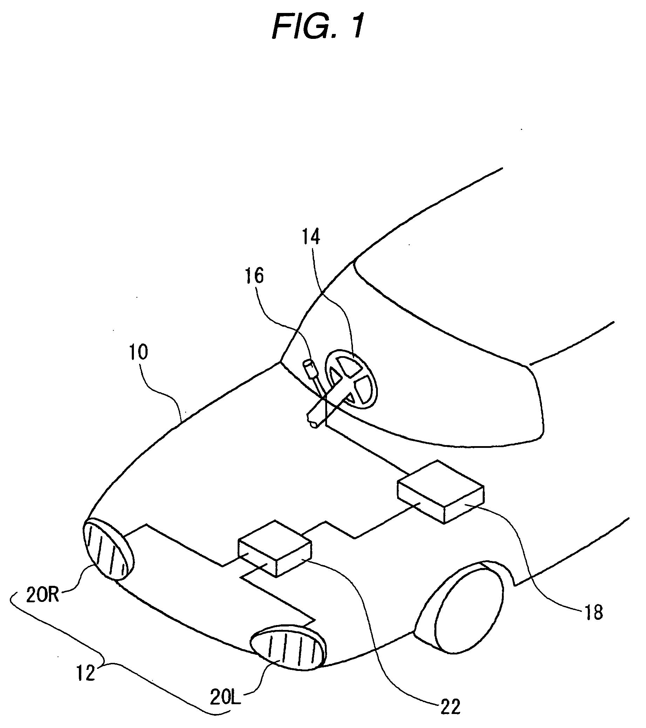

FIG. 1 is a schematic diagram showing an external appearance of a front part of an automobile that employs a vehicle headlight apparatus according to the first exemplary embodiment of the present invention. Although an automobile is shown in Fig. 1, the present inventive concept may be used with any vehicle which has low beam and high beam operation modes. The vehicle 10 according to the first exemplary embodiment of the present invention includes a vehicle headlight apparatus 12; a lamp mode changing switch 16 provided near a steering wheel 14 in order to switch a lamp mode described later; and a vehicle control unit 18 for processing information detected by a sensor (not shown) provided in the vehicle and information concerning a switching operation of the lamp mode changing switch 16 performed by a driver. The vehicle control unit 18 transmits the processed data to the vehicle headlight apparatus 12.

The vehicle headlight apparatus 12 includes a pair of headlight units 20R and 20L, and a headlight control unit 22 for controlling a light distribution characteristic (i.e., a shape and a position of a light distribution pattern) of the headlight units 20R and 20L. On the basis of a signal transmitted from the vehicle control unit 18, the headlight control unit 22 controls the headlight units 20R and 20L in accordance with a distance from the in-front vehicle that is in front of the vehicle 10. In-front vehicles include both oncoming vehicles that are traveling in an opposite direction from the vehicle 10 and ahead-going vehicles that are traveling in the same direction as the vehicle 10 but are ahead of the vehicle 10.. When the lamp mode is changed by using the lamp mode changing switch 16, the headlight control unit 22 according to the first exemplary embodiment controls a projection of light from the headlight units 20R and 20L in accordance with the selected lamp mode.

The lamp modes available to be controlled by the lamp mode changing switch 16 include a "running mode (high beam mode)", a "passing mode (low beam mode)", and an "automatic illuminance adjustment mode". The automatic illuminance adjustment mode indicates a mode in which the illuminance is adjusted in accordance with a distance from the in-front vehicle.

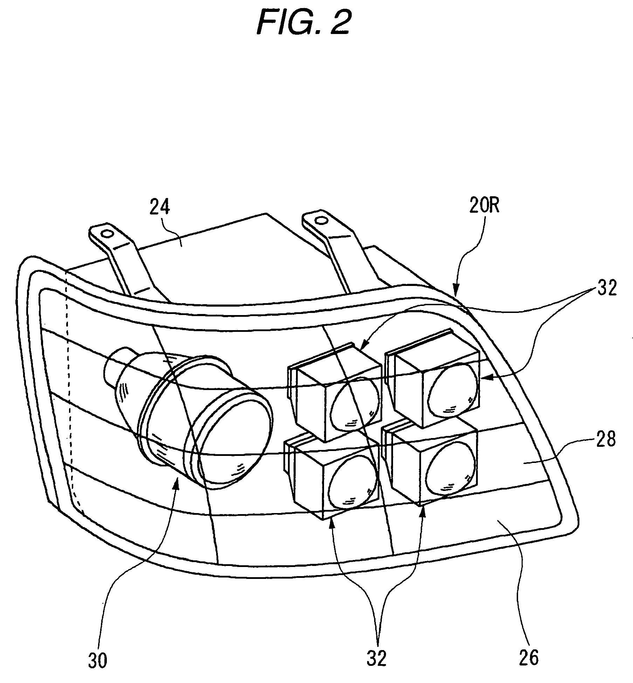

The headlight units provided in the vehicle headlight apparatus are described below. The above-mentioned headlight units 20R and 20L have the same configuration except that their structures are in right-left symmetry to each other. Thus, the following description is given for the right-hand side the headlight unit 20R, which is adopted as an example. Hence, description is omitted for the left-hand side headlight unit 20L. FIG. 2 is an external appearance perspective view of the headlight unit 20R.

The headlight unit 20R includes a lamp body 24; and a light transmitting cover 26 attached to the front opening of the lamp body 24. Accordingly, a lamp chamber 28 is formed by the lamp body 24 and the light transmitting cover 26. The lamp body accommodates a low-beam lamp unit 30 for forming a low-beam light distribution pattern; and four high-beam lamp units 32 for forming a high-beam light distribution pattern.

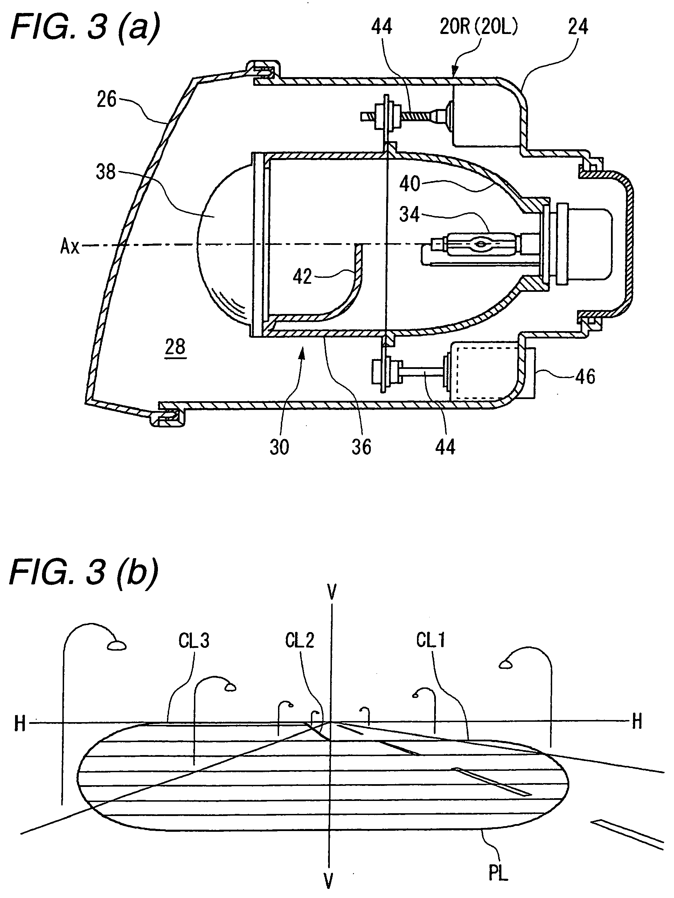

Next, the low-beam lamp unit 30 of the headlight unit 20R is described below. FIG. 3(a) is a schematic sectional view showing the vicinity of the low-beam lamp unit according to the first exemplary embodiment. FIG. 3(b) is a diagram showing the light distribution pattern of the low-beam lamp unit shown in FIG. 3(a).

As shown in FIG. 3(a), the low-beam lamp unit 30 comprises a discharge lamp of a projector type. The low-beam lamp unit 30 includes an electric-discharge lamp 34 serving as a light source; a lamp housing 36 for accommodating the electric-discharge lamp 34; and a lens 38 arranged in the front face of the lamp housing 36. The lamp housing 36 has a spheroid-shaped reflector 40. Light emitted from the electric-discharge lamp 34 and light reflected by the reflector 40 are condensed by the lens 38 and projected in the forward direction of the vehicle 10, so that illumination is achieved.

Further, the lamp housing 36 is provided with a shade 42 for cutline formation. The shade 42 shades upward-projected light in a right region with respect to the optical axis Ax. Accordingly, in the left region, light is projected in an upper direction more than in the right region. Thus, as shown in FIG. 3(b), the low-beam lamp unit 30 forms a light distribution pattern PL that illuminates a large region in front of the vehicle 10 such that glare is prevented in the in-front vehicles. The light distribution pattern PL is a low-beam light distribution pattern of left orientated configuration. Thus, the pattern has cutoff lines CL1, CL2, and CL3 at mutually different levels in the upper edge.

In FIG. 3(b), symbols V and H respectively indicate a perpendicular line and a horizontal line that pass through the optical axis directed in the forward direction of the vehicle 10. Further, the low-beam light distribution pattern is set up in accordance with a light distribution convention set forth in JIS, ECE, or the like.

The low-beam lamp unit 30 is supported by an aiming mechanism 44 and the like inside the lamp chamber 28 so that the optical axis Ax can be changed in the up and down directions by means of an optical axis adjustment unit 46 constructed from a motor, a gear wheel, and the like.

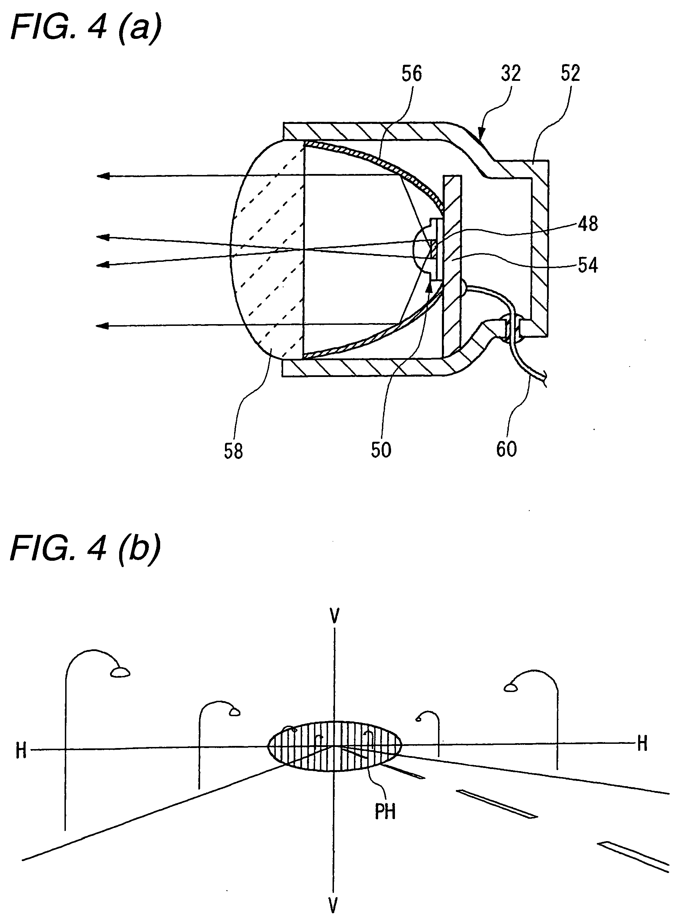

Next, the high-beam lamp unit 32 of the headlight unit 20R is described below. FIG. 4(a) is a schematic sectional view showing the vicinity of the high-beam lamp unit according to the first exemplary embodiment. FIG. 4(b) is a diagram showing an example of the light distribution pattern of the high-beam lamp unit shown in FIG. 4(a). The headlight unit 20R has four high-beam lamp units 32. However, the configuration of each of the four high-beam lamp units 32 is almost similar. Thus, the following description is given for one unit among the four high-beam lamp units 32.

Each of the high-beam lamp units 32 is composed of an LED lamp. As shown in FIG. 4(a), the high-beam lamp unit 32 includes a light emitting diode (LED) module 50 that is formed by sealing an LED 48 with a transparent resin lens. The LED module 50 serves as a light source. The high-beam lamp unit 32 further includes a lamp housing 52 for accommodating the LED module 50; a supporting plate 54 for supporting the LED module 50 inside the lamp housing 52; a reflector 56 provided with a reflecting surface arranged inside the lamp housing 36; and a lens 58 arranged in the front opening of the lamp housing 52.

The high-beam lamp unit 32 is connected to a later-described power supply circuit 62 through an electric cord 60. The electric cord 60 transmits an electric current to the LED 48. In the high-beam lamp unit 32, light emitted from the LED module 50 is condensed by the lens 58 directly or after being reflected by the reflector 56, and is then projected in the forward direction of the vehicle 10. In the high-beam lamp unit 32 according to the first exemplary embodiment, as shown in FIG. 4(b), the shapes of the reflector 56 and the lens 58 are respectively provided such that a light distribution pattern PH is formed that can illuminate a region containing a part above the light distribution pattern PL formed by the low-beam lamp unit 30. Further, in comparison with the low-beam lamp unit 30, the high-beam lamp unit 32 is constructed such as to brightly illuminate a more distant place, although in a narrow range. For simplicity of description, the following description is given for a case that each high-beam lamp unit 32 forms the same light distribution pattern PH. However, the four high-beam lamp units 32 may form different light distribution patterns depending on the application and the purpose. The light distribution patterns of the high-beam lamp units 32 are controlled, in part, by the shapes of the reflector 56 and lens 58 of the high-beam lamp unit 32.

In the vehicle headlight apparatus according to the first exemplary embodiment, projection of light from the headlight units is controlled in accordance with the distance from the in-front vehicle so that improvement in visibility and reduction of glare are simultaneously satisfied at higher levels. The following description is given for a control method for the headlight unit described above.

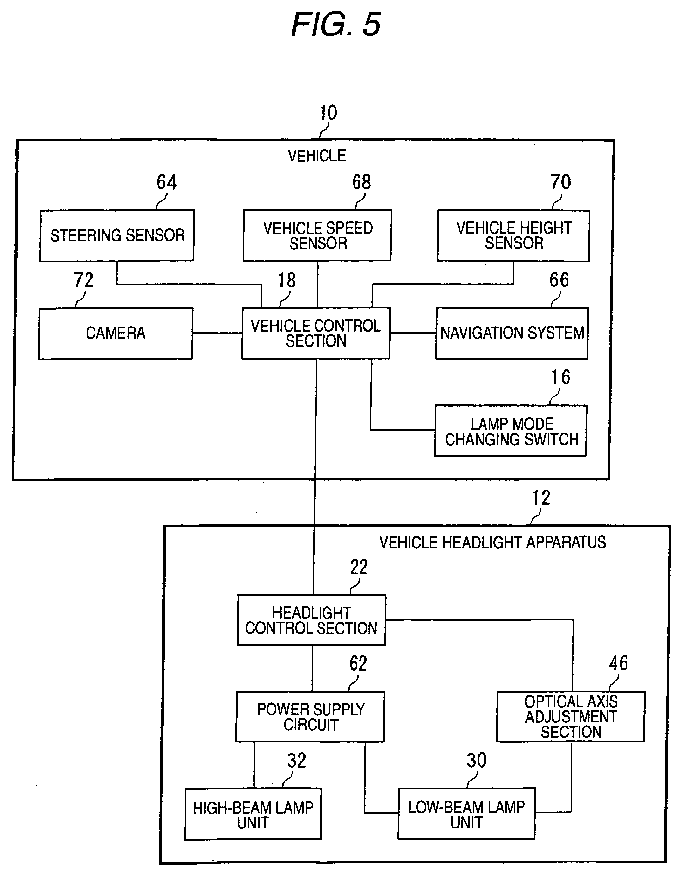

FIG. 5 is a control block diagram describing the configuration of the vehicle 10 and the vehicle headlight apparatus 12 according to the first exemplary embodiment. In the first exemplary embodiment, the light distribution pattern is controlled in accordance with the distance from the in-front vehicle that is calculated on the basis of information acquired by an information acquisition apparatus such as a sensor, a camera, and a navigation system provided in the vehicle 10.

The vehicle headlight apparatus 12 includes the high-beam lamp units 32, the low-beam lamp units 30, the optical axis adjustment mechanism 46, the headlight control unit 22 serving as control unit which controls projection of light from the low-beam lamp unit 30 and the high-beam lamp units 32; and the power supply circuit 62 for supplying electric power for turning ON the lamps to the low-beam lamp unit 30 and the high-beam lamp units 32 on the basis of a control signal from the headlight control unit 22. The vehicle 10 includes a vehicle control unit 18 which controls the vehicle 10; a steering sensor 64 which detects a steering angle in a steering mechanism; a navigation system 66 which performs road guidance to a target by acquiring position information concerning the vehicle 10 on the basis of a signal obtained from satellites and then comparing the position information with stored road information; a vehicle speed sensor 68 which detects the vehicle speed of the vehicle 10; a vehicle height sensor 70 which detects a vehicle height of the vehicle 10; a camera 72 which recognizes in-front vehicles; and the above-mentioned lamp mode changing switch 16.

Calculation of the distance from the in-front vehicle may be performed by various methods. For example, the vehicle control unit 18 may estimate the distance from the in-front vehicle on the basis of image data acquired by the camera 72, or alternatively may calculate the distance from the in-front vehicle on the basis of a detection result obtained by a millimeter wave radar, an infrared ray radar, or the like in place of the camera 72. Alternatively, the vehicle control unit 18 may indirectly calculate the distance on the basis of the position information concerning the vehicle 10 and the position information concerning the in-front vehicle obtained by the navigation system 66. Further, the distance from the in-front vehicle may be calculated on the basis of a combination of these methods.

The vehicle control unit 18 transmits to the headlight control unit 22 information concerning the distance from the in-front vehicle calculated according to one of the above-described methods. Then, in accordance with the distance from the in-front vehicle acquired from the vehicle control unit 18, the headlight control unit 22 controls projection of light from the low-beam lamp unit 30 and the high-beam lamp units 32 in the headlight unit.

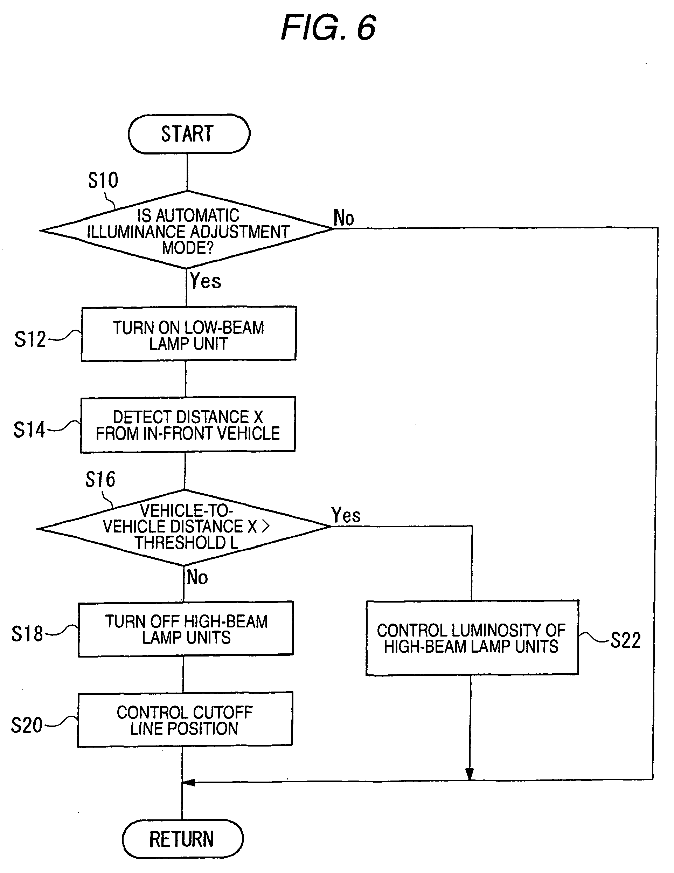

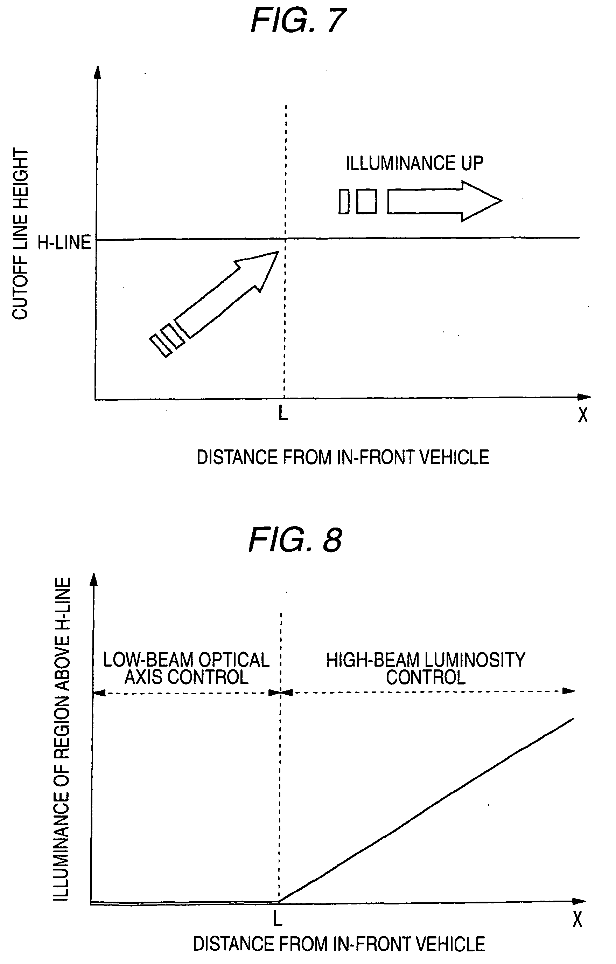

FIG. 6 is a flow chart showing a control method for a vehicle headlight apparatus according to the first exemplary embodiment. The control processing is repeated at intervals and at a timing. The interval and the timing may both be predetermined. FIG. 7 is a diagram schematically showing the relationship between the distance from the in-front vehicle and the cutoff line height. FIG. 8 is a diagram showing the relationship between the distance from the in-front vehicle and the illuminance in a region above a horizontal line (i.e., an H-line).

When the processing is started, it is determined whether an automatic illuminance adjustment mode is selected (S10). Specifically, when the driver operates the lamp mode changing switch 16 so as to select an automatic illuminance adjustment mode, the vehicle control unit 18 outputs a control signal to the headlight control unit 22. If it is determined that an automatic illuminance adjustment mode is not being selected (No in S10), the headlight control unit 22 terminates the processing temporarily. On the other hand, if it is determined that an automatic illuminance adjustment mode is being selected (Yes in S10), the headlight control unit 22 turns ON the low-beam lamp unit 30 by means of the power supply circuit 62 (S12).

Then, the headlight control unit 22 acquires the information of the vehicle-to-vehicle distance X relative to an in-front vehicle (S14), and then compares the acquired distance with a threshold value L to determine whether the vehicle-to-vehicle distance is greater than the threshold L(S 16). Here, when a plurality of in-front vehicles are present, the distance from the in-front vehicle that is nearest to the vehicle 10 may be adopted. Further, when no in-front vehicle is present, the vehicle-to-vehicle distance X may be set to be infinity, or alternatively set to a value sufficiently greater than the threshold value L. Then, the subsequent processing may be performed. If it is determined that the vehicle-to-vehicle distance X is less than or equal to the threshold value L (No in S16), the headlight control unit 22 controls the power supply circuit 62 to turn OFF the high-beam lamp units 32 when they are ON (S18), and controls projection of light from the low-beam lamp unit 30 such that the low-beam light distribution pattern gradually illuminates more of an upper part of the area in front of the vehicle 10 as the distance from the in-front vehicle increases (S20). Specifically, the headlight control unit 22 controls the electric current provided to the motor of the optical axis adjustment unit 46 in the above-mentioned aiming mechanism 44, and thereby changes the angle of the optical axis Ax.

As a result, as shown in FIG. 7, the position of the cutoff line is changed in accordance with the distance from the in-front vehicle so that the position of the light distribution pattern is controlled (S20). At that time, as shown in FIG. 8, the low-beam lamp unit 30 is set up so as not to illuminate a region above the horizontal line as long as the vehicle-to-vehicle distance X relative to an in-front vehicle is less than or equal to the threshold value L. Thus, even when the vehicle-to-vehicle distance from an in-front vehicle is small, visibility of the area extending to the in-front vehicle is improved without causing glare.

In contrast, if it is determined that the vehicle-to-vehicle distance X is greater than the threshold value L (Yes in S16), the luminosity of the high-beam lamp units 32 is controlled (S22). The high-beam lamp units 32 are constructed so as to be capable of forming a high-beam light distribution pattern PH that can illuminate a region containing a part above the low-beam light distribution pattern PL formed by the low-beam lamp unit 30 (above the cutoff lines CL1 to CL3) as shown in FIG. 4(b). In the headlight control unit 22 according to the first exemplary embodiment, the electric current provided to the high-beam lamp units 32 is controlled by the power supply circuit 62 in such a manner that with increasing distance from an in-front vehicle, the luminosity is increased so that the illuminance of the high-beam light distribution pattern is increased (see FIG. 7). Thus, the illuminance of a region above the horizontal line in the light distribution pattern formed by the high-beam lamp units 32 is set so as to increase with increasing vehicle-to-vehicle distance X above the threshold value L as shown in FIG. 8.

As such, the position of the light distribution pattern of the low-beam lamp unit 30 can be changed by changing the optical axis. Thus, in comparison with a case that the low-beam lamp unit 30 forms merely a fixed light distribution pattern, visibility of an area between the vehicle 10 and an in-front vehicle can be improved stepwise. Further, when the distance from the in-front vehicle is greater than the threshold value L, the luminosity of the high-beam lamp units 32 is controlled into a level not causing glare to the in-front vehicle, so that visibility is improved. That is, when the distance from the in-front vehicle is smaller than the threshold value L, the position of the low-beam light distribution pattern is controlled. In contrast, when the distance from the in-front vehicle is greater than the threshold value L, the illuminance of the high-beam light distribution pattern is controlled. As a result, appropriate light projection is achieved in accordance with the distance from the in-front vehicle.

Further, when the distance from the in-front vehicle is equal to the threshold value L, the headlight control unit 22 according to the first exemplary embodiment may control the position of the light distribution pattern such that the cutoff lines CL1 to CL3 of the low-beam light distribution pattern PL reach the horizontal line. Accordingly, even when the distance from the in-front vehicle varies across the threshold value, the low-beam light distribution pattern PL having been projected until then illuminates at least a region below the horizontal line. This control prevents an illuminated area on the road surface from extending discontinuously when illumination by the high-beam lamp units 32 is added newly. As a result, the driver's sense of incongruity associated with illumination control is reduced. Alternatively, the headlight control unit 22 may perform the control such that when the distance from the in-front vehicle reaches the threshold value L, the high-beam lamp units 32 are turned ON at a minimum operable luminosity and then the luminosity is gradually increased in accordance with the distance from the in-front vehicle.

Further, the first exemplary embodiment has described a case in which the control of the position in the up and down directions of the low-beam light distribution pattern PL is achieved by the movement of the optical axis performed by the aiming mechanism 44. However, alternatively, a moving mechanism for moving the shade 42 in the up and down directions may be provided. Then, the moving mechanism may be controlled so that the position in the up and down directions of the low-beam light distribution pattern PL may be controlled.

That is, although the whole of the low beam distribution pattern PL is moved vertically in the above exemplary, for not imparting glare to the in-front vehicle, it is enough to move an upper end of the low beam distribution pattern PL upwards in accordance with the increase of the distance.

Further, in the headlight control unit 22, the threshold value may be changed in accordance with the environment where the vehicle 10 is operated. Here, the environment where the vehicle 10 is operated indicates various kinds of quantities of state and external information relevant to the vehicle running, and includes the vehicle speed, the steering angle, the vehicle posture, the weather, the illuminance, and navigation information. For example, when on the basis of the detection result of the illuminance sensor for detecting the surrounding illuminance, it is determined that the vehicle 10 is running in an urban area where the surrounding is bright, the surrounding visibility is expected to be relatively satisfactory. Thus, the threshold value L is increased in accordance with the surrounding environment, so that the distance from the in-front vehicle at the timing that the high-beam lamp units 32 goes ON increases, and so that priority is imparted to the reduction of glare caused in the in-front vehicle. In contrast, when it is determined that the vehicle 10 is running in a suburban area having less surrounding light, the surrounding visibility is expected to be unsatisfactory. Thus, the threshold value L is reduced in accordance with the surrounding environment, so that the distance from the in-front vehicle at the timing that the high-beam lamp units 32 goes ON decreases, and so that priority is imparted to improvement in the visibility of the road surface to the in-front vehicle.

### (Second exemplary embodiment)

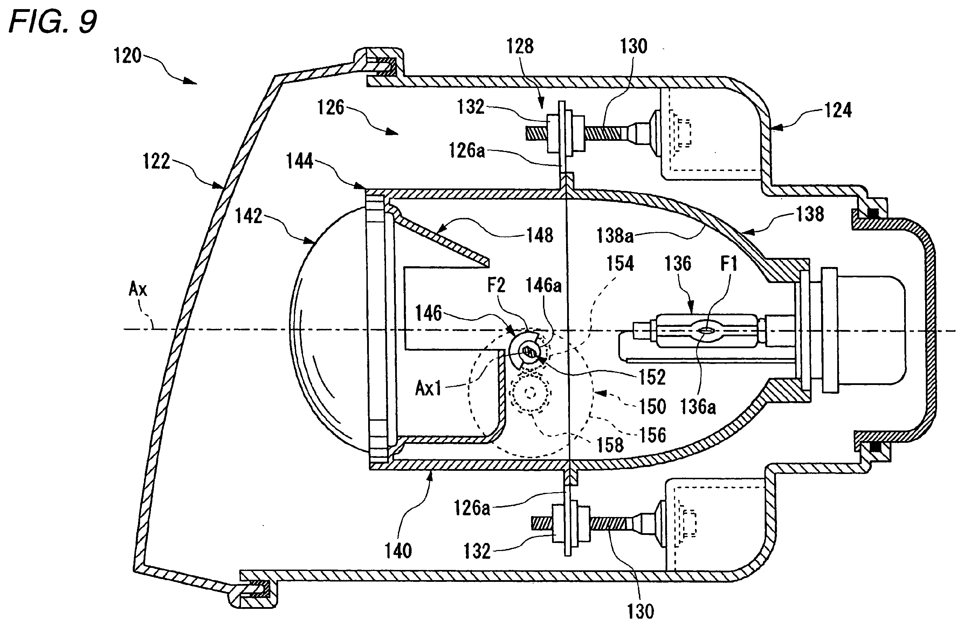

FIG. 9 is a schematic sectional view of a headlight unit according to a second exemplary embodiment. In the headlight unit according to the second exemplary embodiment, when a shade is rotated, a low-beam light distribution pattern and a high-beam light distribution pattern are formed in a switched manner.

This embodiment also relates to moving only the upper end of the low beam distribution pattern PL upwards in accordance with the increase of the distance.

In the above described first exemplary embodiment, there are required two lamp units, that is, low-beam lamp unit 30 and high-beam lamp unit 32. However, according to the second exemplary embodiment, a lamp unit 120 can produce both the low-beam and high-beam by using a shade 146.

As shown in FIG. 9 the headlight unit 120 according to the second exemplary embodiment comprises a transparent light transmitting cover 122 and a lamp body 124. In the inside of a lamp chamber formed by the light transmitting cover 122 and the lamp body 124, a lamp unit 126 having an optical axis Ax extending in the forward and backward directions of the vehicle 10 is accommodated in a manner capable of being tilted in the up and down directions and in the right and left directions by an aiming mechanism 128.

The aiming mechanism 128 includes brackets 126a and aiming screws 130, is constructed such that the brackets 126a of the lamp unit 126 are linked to the aiming screws 130 attached via aiming nuts 132 in a revolvable manner at a plurality of positions in the lamp body 124. The aiming mechanism 128 permits aiming adjustment of the lamp unit 126. In a state that the aiming adjustment is performed, the optical axis Ax of the lamp body 124 extends downward by 0.5 to 0.6 degree relative to the forward and backward directions of the vehicle 10.

The lamp unit 126 comprises a lamp unit of a projector type, and includes a discharge bulb 136, a reflector 138, a lamp housing 140, a projection lens 142, a retaining ring 144, a shade 146, an auxiliary shade 148, and a shade drive mechanism 150.

The discharge bulb 136 comprises a metal halide bulb, and is attached to the reflector 138 in such a manner that a light source 136a including an electroluminescence unit is located on the optical axis Ax and is coaxial to the optical axis Ax.

The reflector 138 has a reflecting surface 138a provided in approximately the shape of an ellipse spherical surface having a center axis on the optical axis Ax. In the reflecting surface 138a, the cross sectional shape that contains the optical axis Ax is approximately of an ellipse having a first focal point F1 at the center position of the light source 136a. Thus, light from the light source 136a is reflected and condensed in the forward direction toward the optical axis Ax. The eccentricity of the reflecting surface 138a gradually increases from the vertical cross unit toward the horizontal unit.

The lamp housing 140 extends approximately cylindrically in the forward direction from the front end opening of the reflector 138. As a rear end part of the reflector 138, the reflector 138 is fixed and supported. Further, in the front end part of the reflector 138, the lamp housing 140 fixes and supports the projection lens 142 via a retaining ring 144 so that the projection lens 142 is located on the optical axis Ax.

The projection lens 142 comprises a plane-convex lens whose front surface is convex and whose rear surface is planar. Then, the image of the light source 136a formed on the rear-side focal plane that contains the rear-side focal point F2 is projected as an inverted image in the forward direction. The shade 146 and the auxiliary shade 148 are arranged in the inner space of the lamp housing 140, and shade a part of reflected light from the reflector 138. The shade 146 is supported in a rotatable manner by the lamp housing 140. The auxiliary shade 148 is integrated with the lamp housing 140.

The shade 146 comprises a rotating shaft member that is arranged along a horizontal axis Ax1 extending in a width direction of the vehicle 10. The horizontal axis Ax1 is positioned at a lower vicinity of a rear-side focal point F2 of the projection lens 142. The shade is constructed so as to be rotatable around the horizontal axis Ax1. That is, the shade 146 is composed of a metal plate member that surrounds, in an approximately semi-cylindrical configuration, a metal core member 152 having an elliptic cross unit arranged on the horizontal axis Ax1. Wall surface units 146a formed at the two ends are fixed to the core member 152. In the shade 146, an outer peripheral surface is formed over a central angle range of approximately 180 degrees with respect to the horizontal axis Ax1 and this outer peripheral surface forms the low-beam light distribution, while a recess is formed in the remaining central angle range of approximately 180 degrees and forms the high-beam light distribution.

The core member 152 is supported near the two ends by the lamp housing 140 in a rotatable manner via a pair of collars (not shown). Further, one end part of the core member 152 is provided with a gear wheel 154. Regardless of the rotating position of the shade 146, the auxiliary shade 148 shades reflector-reflected light that passes under the shade 146, and shades stray light that enters the projection lens 142.

The shade drive mechanism 150 includes a step motor 156; a gear wheel 158 fixed to an output axis of the step motor 156; and a gear wheel 154 engaging with the gear wheel 158. Similar to the first exemplary embodiment, the shade drive mechanism 150 is driven and controlled in accordance with the running situation of the vehicle 10 or alternatively in response to operation of the lamp mode changing switch 16 shown in FIG. 1.

In the vehicle headlight apparatus according to the second exemplary embodiment, projection of light from the headlight units is controlled in accordance with the distance from the in-front vehicle so that improvement in visibility and reduction of glare are simultaneously satisfied at higher levels. The following description is given for a control method for the headlight unit described above according to the second exemplary embodiment. Here, where the description is the same as for the first exemplary embodiment, repeated description is omitted.

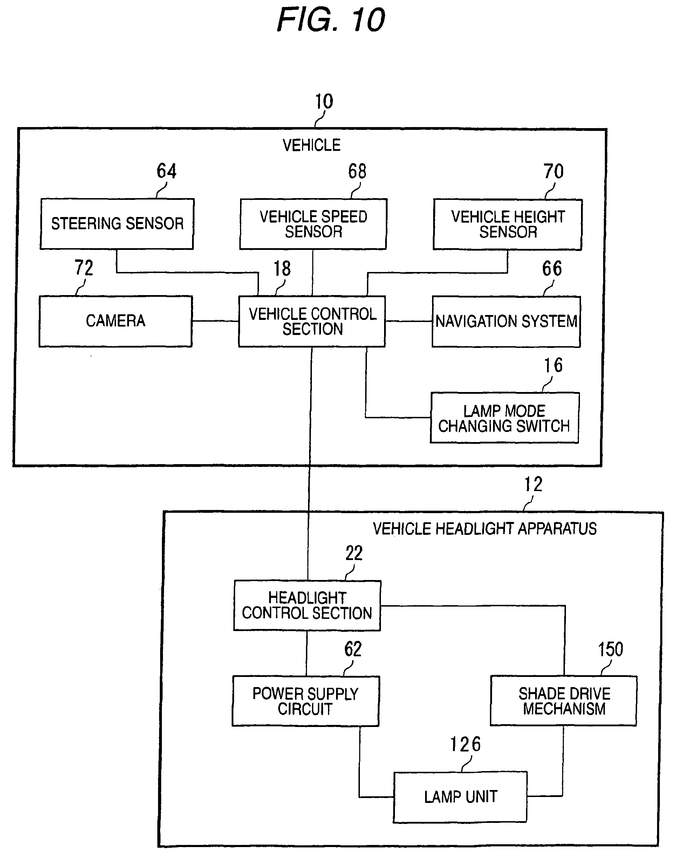

FIG. 10 is a control block diagram describing an example configuration of the vehicle 10 and the vehicle headlight apparatus 112 according to the second exemplary embodiment. As in the case of the first exemplary embodiment, in the second exemplary embodiment, the light distribution pattern is controlled in accordance with the distance from the in-front vehicle that is calculated on the basis of information acquired by an information acquisition apparatus such as a sensor, a camera, and a navigation system provided on the vehicle 10. The vehicle configuration is the same as in the first exemplary embodiment, so a repeated description is omitted here.

The vehicle headlight apparatus 112 includes a lamp unit 126; a headlight control unit 22 for controlling projection of light from the lamp unit 126; a power supply circuit 62 for supplying, to the lamp unit 126, electric power for turning ON the lamp on the basis of a control signal from the headlight control unit 22; and a shade drive mechanism 150 for changing the light distribution pattern in the lamp unit 126.

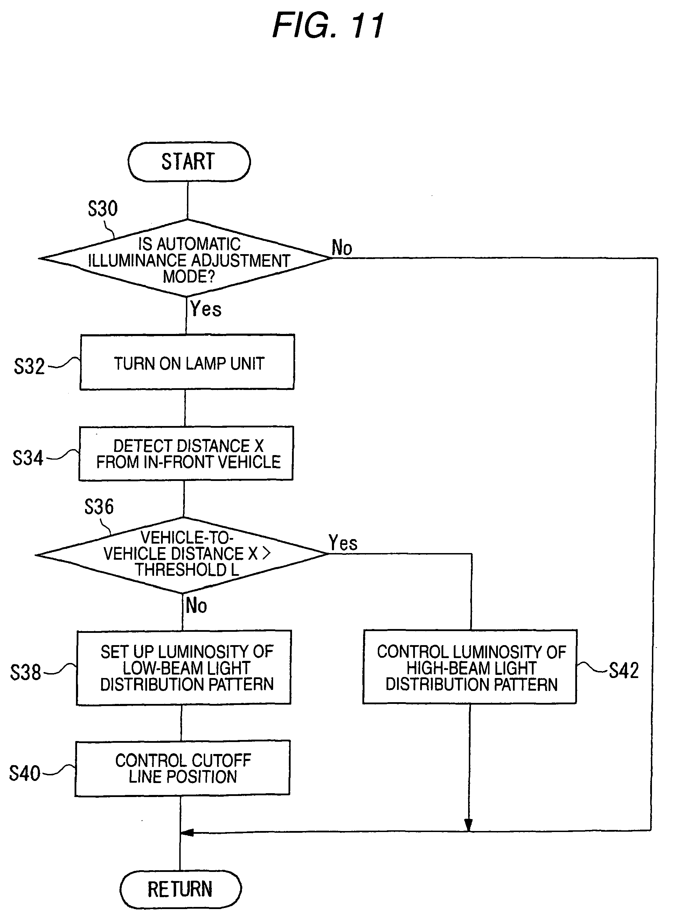

FIG. 11 is a flow chart showing an example of a control method for a vehicle headlight apparatus according to the second exemplary embodiment. The control processing is repeated at intervals and at a certain timing. The interval and timing may both be predetermined.

When the processing is started, it is determined whether an automatic illuminance adjustment mode is selected (S30). If it is determined that an automatic illuminance adjustment mode is not being selected (No in S30), the headlight control unit 22 terminates the processing temporarily. On the other hand, if it is determined that an automatic illuminance adjustment mode is being selected (Yes in S30), the headlight control unit 22 turns ON the lamp unit 126 by means of the power supply circuit 62 (S32).

The headlight control unit 22 acquires information about the vehicle-to-vehicle distance X relative to an in-front vehicle (S34), and then compares the vehicle-to-vehicle distance with a threshold value L in order to determine if the vehicle-to-vehicle distance is greater than the threshold value L (S36). If it is determined that the vehicle-to-vehicle distance X is less than or equal to the threshold value L (No in S36), the headlight control unit 22 controls the power supply circuit 62 such that when the lamp unit 126 is ON at the luminosity of the high-beam light distribution pattern, the luminosity should be reduced towards that of the low-beam light distribution pattern (S38). The headlight control unit 22 controls projection of light from the lamp unit 126 such that the low-beam light distribution pattern gradually illuminates an upper part of the road in front of the vehicle 10 as the distance form the in-front vehicle is increased. Specifically, the headlight control unit 22 controls the electric current provided to the step motor 156 in the shade drive mechanism 150, so as to change the rotational amount (position) of the shade 146.

As a result, as shown in FIG. 7, the position of the cutoff line is changed in accordance with the distance from the in-front vehicle so that the position of the upper end of the light distribution pattern is controlled (S40). At that time, as shown in FIG. 8, the lamp unit 126 is set so as not to illuminate a region above the horizontal line when the vehicle-to-vehicle distance X relative to an in-front vehicle does not exceed the threshold value L. Thus, even when the vehicle-to-vehicle distance from an in-front vehicle is small, visibility of the area extending from the vehicle 10 to the in-front vehicle is improved without causing glare.

Returning to Fig. 11, if it is determined that the vehicle-to-vehicle distance X is greater than the threshold value L (Yes in S36), the rotational position of the shade 146 is changed so that the light emitted from the discharge bulb 136 to pass the recessed portion on the shade 146. In such a manner, the high-beam light distribution pattern is formed. Further, in this state, the luminosity of the high-beam light distribution pattern is controlled (S42). As a result of the high-beam light distribution pattern, a region containing a part above the low-beam light distribution pattern is illuminated. In the headlight control unit 22 according to the second exemplary embodiment embodiment, the electric current provided to the lamp unit 126 is controlled in the power supply circuit 62 in such a manner that, as a distance from an in-front vehicle is increased, the luminosity is increased so that the illuminance of the high-beam light distribution pattern is increased (see FIG. 7). Thus, the illuminance of a region above the horizontal line in the light distribution pattern formed by the high-beam lamp units 32 is set so as to increase with increasing vehicle-to-vehicle distance X above the threshold value L as shown in FIG. 8.

As such, when the shade 146 is changed, the position of the low-beam light distribution pattern can be changed. Thus, in comparison with a case that the lamp unit 126 forms merely a fixed light distribution pattern, visibility of an area between the vehicle 10 and an in-front vehicle can be improved stepwise (i.e., gradually). Further, when the distance from the in-front vehicle is greater than the threshold value L, the luminosity of the high-beam light distribution pattern is controlled towards a level that does not cause glare to the in-front vehicle, so that visibility is improved. That is, when the distance from the in-front vehicle is smaller than the threshold value L, the position of the low-beam light distribution pattern is controlled. In contrast, when the distance from the in-front vehicle is greater than the threshold value L, the illuminance of the high-beam light distribution pattern is controlled. As a result, an appropriate light projection is achieved in accordance with the distance of the vehicle 10 from the in-front vehicle.

As described above, the present inventive concept has been explained with reference to certain exemplary embodiments described above. However, the present inventive concept is not limited to these exemplary embodiments. That is, appropriate combinations or modifications of these exemplary embodiments are included in the scope of the present invention.

For example, in the above-mentioned exemplary embodiments, in order that a desired illuminance should be obtained in the light distribution pattern, the electric current provided to the LED module 50 or the discharge bulb 136 is adjusted in order to change the luminosity. However, as an alternative, for example, a mechanism such as a liquid crystal shutter that can change the amount of transmission of light may be provided in front of the light source. Then, the amount of transmission may be changed so that the illuminance of the light distribution pattern may be controlled.

Further, in the above-mentioned exemplary embodiments, additional thresholds may also be provided. For example, when the distance X from an in-front vehicle exceeds a threshold value L1 which is greater than the threshold value L, the illuminance of the light distribution pattern that illuminates a region above the horizontal line may be fixed in the subsequent operation regardless of the value of distance X. When the distance X from an in-front vehicle is remarkably great, it is very difficult to provide visibility of the road surface region over the entire range. Thus, the illuminance of the light distribution pattern is made fixed so that the power consumption is reduced and the lifetime of the light source is extended.

Alternatively or in addition to providing the additional threshold L1, when the distance X from an in-front vehicle goes below a threshold value L2 smaller than the threshold value L, the control of the cutoff line position may be stopped. When the distance X from an in-front vehicle is small, if the light distribution pattern is moved at each time that the distance X from an in-front vehicle varies, there is a disadvantage in that the lifetime of the driving motor of the shade is decreased due to frequent driving of the motor. In this case, the decrease in lifetime of the drive mechanism may exceed the improvement in visibility achieved. Thus, the control of the cutoff line position may be stopped so that the power consumption is reduced and the lifetime of the drive mechanism is extended.

Here, in the above-mentioned embodiments, the illuminance has been increased linearly to the distance from the in-front vehicle. However, the luminance may alternatively be changed in a non-linear or stepwise manner, or according to a predetermined curve.

The above described vehicle headlight apparatus comprises headlight units which is arranged in a vehicle and is adapted to projects light in first and/or second distribution patterns; and a control unit which controls projection of light from the headlight unit, in accordance with a distance from an in-front vehicle that runs in front of the own vehicle. The control unit controls the headlight unit such that in a first case that the distance from the in-front vehicle is smaller than a threshold value, the control unit controls a position of the first light distribution pattern such as to illuminate a gradually upper part in association with increasing of the distance from the in-front vehicle; and in a second case that the distance from the in-front vehicle is greater than the threshold value, the control unit forms the second light distribution pattern that illuminates a region containing a part above the first light distribution pattern, and controls an illuminance of the second light distribution pattern.

According to the exemplary embodiments of the present invention, for example, in comparison with a case that the light distribution pattern is fixed, visibility of an area between the vehicle and an in-front vehicle can be improved. Further, when the distance from the in-front vehicle is greater than a threshold value, the illuminance is controlled towards a level not causing glare to the in-front vehicle, so that visibility is improved. Here, the threshold value may be set, for example, in consideration of a distance in which the control alone of the position of the light distribution pattern becomes insufficient in improving the visibility of the illuminated area extending from the vehicle to the in-front vehicle; or alternatively in consideration of a performance of the light sources and the configuration such as the shape of the lamp units.

When the distance from the in-front vehicle is equal to the threshold value, the control unit may control a position of the light distribution pattern such that a cutoff line of the light distribution pattern reaches a horizontal line. Accordingly, even when the distance from the in-front vehicle varies across the threshold value, the light distribution pattern having been projected until then illuminates at least a region below the horizontal line. This operation prevents the illuminated area on the road surface from extending discontinuously. As a result, the driver's sense of incongruity associated with illumination control is reduced.

The headlight units may have a first lamp unit that forms a low-beam light distribution pattern as the first light distribution pattern and a second lamp unit that forms a high-beam light distribution pattern as the second light distribution pattern. Then, in the first case, the control unit controls the projection of light from the first lamp unit such that the low-beam light distribution pattern illuminates a gradually upper part in association with the increasing of the distance from the in-front vehicle. Further, in the second case, the control unit forms the high-beam light distribution pattern that illuminates a region containing a part above the low-beam light distribution pattern, and controls projection of light from the second lamp unit such that an illuminance of the high-beam light distribution pattern increases with the increasing of the distance from the in-front vehicle.

Accordingly, when the distance from the in-front vehicle is smaller than the threshold value, the position of the low-beam light distribution pattern is controlled. In contrast, when the distance from the in-front vehicle is greater than the threshold value, the illuminance of the high-beam light distribution pattern is controlled. As a result, appropriate light projection is achieved in accordance with the distance from the in-front vehicle.

The control unit may also change the threshold value in accordance with an environment in which the vehicle runs. Visibility is affected by the environment such as a surrounding illuminance and/or weather conditions where the vehicle runs. Thus, when the threshold value is changed in accordance with such an environment, appropriate light projection is achieved in accordance with the distance from the in-front vehicle.

Further, according to the exemplary embodiments of the present invention, there is provided a control method for a vehicle headlight apparatus, wherein when a distance from an in-front vehicle is smaller than a threshold value, an vertical direction of a light distribution pattern is controlled in accordance with the distance from the in-front vehicle, and when the distance from the in-front vehicle is greater than the threshold value, an illuminance of the light distribution pattern is controlled so as to be increased in accordance with the distance from the in-front vehicle.

Accordingly, in comparison with a case where the light distribution pattern is fixed, the visibility of an area between the vehicle and an in-front vehicle can be improved. Further, when the distance from the in-front vehicle is greater than the threshold value, the illuminance is increased towards a level not causing glare to the in-front vehicle, so that visibility is improved.

According to the present invention, improvement in visibility and reduction of glare can simultaneously be satisfied to a greater degree using an approach based on the distance from the in-front vehicle.

In the above description, while the present invention has been shown and described with reference to certain exemplary embodiments thereof, it will be understood by those skilled in the art that various changes in form and details may be made therein without departing from the spirit and scope of the invention as defined by the appended claims.

## Claims

1. A headlight apparatus (12) for a vehicle (10), the headlight apparatus comprising:
a plurality of headlight units (20L, 20R) which are adapted to be arranged in the vehicle, each of the headlight units being adapted to project light in a plurality of distribution patterns comprising a first, low-beam light distribution pattern (PL) and a second, high-beam light distribution pattern (PH); and
a control unit (22) which is configured to control the plurality of headlight units to project the light in accordance with a distance from the vehicle to an in-front vehicle,
**characterized in that**, if the distance is smaller than a threshold value, the control unit controls a position of an upper end of the first light distribution pattern to gradually move upwards based on the increase of the distance and,
if the distance is greater than the threshold value, the control unit forms the second light distribution pattern that illuminates a region including a portion above the first light distribution pattern, and controls an illuminance of the second light distribution pattern such that the illuminance is increased in accordance with an increase of the distance.

2. The headlight apparatus according to claim 1, wherein, when the distance is equal to the threshold value, the control unit controls the position of the upper end of the first light distribution pattern so that a cut-off line (CL1, CL2, CL3) thereof matches the horizontal line (H), which passes through an optical axis (Ax) of the plurality of headlamp units.

3. The headlight apparatus according to claim 1 or 2,
wherein
each of the plurality of headlight units comprises:
a first lamp unit (30) that forms the first, low-beam light distribution pattern and a second lamp unit (32) that forms the second, high-beam light distribution pattern, and
the control unit (22) controls the plurality of headlight units such that if the distance is smaller than the threshold value, the control unit controls the first lamp units of the plurality of headlamp units such that the position of the low-beam light distribution pattern gradually moves towards the horizontal line based on the distance; and
if the distance is greater than the threshold value, the control unit controls the second lamp units of the plurality of headlamp units to form the high-beam light distribution pattern that illuminates the region containing the portion above the low-beam light distribution pattern, and controls the second lamp units such that an illuminance of the high-beam light distribution pattern increases as the distance increases.

4. The headlight apparatus according to one of claims 1 to 3, wherein the control unit sets the threshold value in accordance with an environment in which the vehicle runs.

5. A control method for controlling a vehicle headlight apparatus comprising a plurality of headlamp units, the control method being **characterized by** comprising:
obtaining a distance from the vehicle to an in-front vehicle (S34);
if the distance is smaller than a threshold value (S36), controlling the plurality of headlamp units to gradually move a position of an upper end of a low-beam light distribution pattern produced by the headlamp units toward upward based on an increase of the distance (S40), and
if the distance is greater than the threshold value (S36), controlling the plurality of headlamp units to change an illuminance of a high-beam light distribution pattern such that the illuminance is increased in accordance with an increase of the distance (S42).

6. The headlight apparatus according to one of claims 1 to 4, wherein each of the headlight units comprises:
a projection lens (142);
a discharge bulb (136) positioned at a front focal point of the projection lens;
a reflector (138) which reflects light emitted from the discharge bulb;
a rotatable shade member (146) which is provided along a horizontal axis extending in a width direction of the vehicle, the horizontal axis positioned at a rear focal point of the projection lens; and
a stationary auxiliary shade member (148),
wherein the shade member comprises:
an outer peripheral surface formed over a central angle range of about 180 degrees with respect to the horizontal axis and which forms a low-beam light distribution pattern as the first distribution pattern; and
a recess which is formed in the outer peripheral surface over the remaining central angle range of about 180 degrees with respect to the horizontal axis and which forms a high-beam light distribution pattern as the second light distribution pattern,
wherein the first and second light distribution patterns are switched by rotating the shade member, and
the position of the upper end of the first light distribution pattern is gradually moved by gradually changing a rotating amount of the shade member.

## Patentansprüche

1. Scheinwerfervorrichtung (12) für ein Fahrzeug (10), wobei die Scheinwerfervorrichtung umfasst:
mehrere Scheinwerfereinheiten (20L, 20R), die dazu angepasst sind, in dem Fahrzeug angeordnet zu sein, wobei jede der Scheinwerfereinheiten dazu angepasst ist, Licht in einer Mehrzahl von Verteilungsmustern, die ein erstes Abblendlichtverteilungsmuster (PL) und ein zweites Fernlichtverteilungsmuster (PH) umfassen, zu projizieren; und
eine Steuerungseinheit (22), die dazu ausgestaltet ist, die mehreren Scheinwerfereinheiten so zu steuern, dass sie das Licht gemäß einem Abstand von dem Fahrzeug zu einem vorderen Fahrzeug projizieren,
**dadurch gekennzeichnet, dass**, wenn der Abstand kleiner als ein Schwellenwert ist, die Steuerungseinheit eine Position eines oberen Endes des ersten Lichtverteilungsmusters auf Grundlage der Vergrößerung des Abstandes dazu steuert, dass sie sich graduell nach oben bewegt, und,
wenn der Abstand größer als der Schwellenwert ist, die Steuerungseinheit das zweite Lichtverteilungsmuster bildet, das einen Bereich inklusive eines Abschnitts oberhalb des ersten Lichtverteilungsmusters ausleuchtet, und eine Lichtstärke des zweiten Lichtverteilungsmusters so steuert, dass die Ausleuchtung gemäß einer Vergrößerung des Abstandes verstärkt wird.

2. Scheinwerfervorrichtung nach Anspruch 1, wobei, wenn der Abstand gleich dem Schwellenwert ist, die Steuerungseinheit die Position des oberen Endes des ersten Lichtverteilungsmusters so steuert, dass eine Grenzlinie (CL1, CL2, CL3) hiervon mit der horizontalen Linie (H) übereinstimmt, die durch eine optische Achse (Ax) der mehreren Scheinwerfereinheiten passiert.

3. Scheinwerfervorrichtung nach Anspruch 1 oder 2, wobei jede der mehreren Scheinwerfereinheiten umfasst:
eine erste Leuchteneinheit (30), die das erste Abblendlichtverteilungsmusters bildet, und eine zweite Leuchteneinheit (32) die das zweite Fernlichtverteilungsmuster bildet, und
wobei die Steuerungseinheit (22) die mehreren Scheinwerfereinheiten so steuert, dass, wenn der Abstand kleiner als der Schwellenwert ist, die Steuerungseinheit die ersten Leuchteneinheiten der mehreren Scheinwerfereinheiten so steuert, dass sich die Position der Abblendlichtverteilungsmuster auf Grundlage des Abstandes graduell in Richtung der horizontalen Linie bewegt; und
wenn der Abstand größer als der Schwellenwert ist, die Steuerungseinheit die zweiten Leuchteneinheiten der mehreren Scheinwerfereinheiten so steuert, dass sie das Fernlichtverteilungsmusters bilden, das den Bereich ausleuchtet, der den Abschnitt oberhalb des Abblendlichtverteilungsmusters umfasst, und die zweiten Leuchteneinheiten so steuert, dass eine Ausleuchtung des Fernlichtverteilungsmusters ansteigt, wenn der Abstand ansteigt.

4. Scheinwerfervorrichtung nach einem der Ansprüche 1-3, wobei die Steuerungseinheit den Schwellenwert in Übereinstimmung mit einer Umgebung einstellt, in der das Fahrzeug fährt.

5. Steuerungsverfahren zum Steuern einer Fahrzeugscheinwerfervorrichtung umfassend mehrere Scheinwerfereinheiten, wobei das Steuerungsverfahren **dadurch gekennzeichnet ist, dass** es umfasst:
Erhalten eines Abstands von dem Fahrzeug zu einem vorderen Fahrzeug (S34);
wenn der Abstand kleiner als ein Schwellenwert ist (S36), Steuern der mehreren Scheinwerfereinheiten, um eine Position eines oberen Endes eines Abblendlichtverteilungsmusters, das durch die Scheinwerfereinheiten erzeugt wird, graduell nach oben zu bewegen, basierend auf einem Anstieg des Abstands (S40), und
wenn der Abstand größer als der Schwellenwert ist (S36), Steuern der mehreren Scheinwerfereinheiten, um eine Ausleuchtung eines Abblendlichtverteilungsmusters zu verändern, sodass die Ausleuchtung in Übereinstimmung mit einem Anstieg des Abstands vergrößert wird (S42).

6. Scheinwerfervorrichtung nach einem der Ansprüche 1-4, wobei jede der Scheinwerfereinheiten umfasst:
eine Projektionslinse (142);
eine Entladungslampe (136), die an einem vorderen Brennpunkt der Projektionslinse positioniert ist;
einen Reflektor (138), der Licht, das von der Entladungslampe emittiert wird, reflektiert;
ein rotierbares Blendenelement (146), das entlang einer horizontalen Achse, die sich in einer Breitenrichtung des Fahrzeugs erstreckt, vorgesehen ist, wobei die horizontale Achse an einem hinteren Brennpunkt der Projektionslinse positioniert ist; und
ein stationäres Hilfsblendenelement (148), wobei das Blendenelement umfasst:
eine äußere Umfangsoberfläche, die über einen zentralen Winkelbereich von etwa 180 Grad in Bezug auf die horizontale Achse ausgebildet ist und die ein Abblendlichtverteilungsmuster als das erste Verteilungsmuster bildet; und
eine Ausnehmung, die in der äußeren Umfangsoberfläche über den verbleibenden zentralen Winkelbereich von etwa 180 Grad in Bezug auf die horizontale Achse ausgebildet ist und die ein Abblendlichtverteilungsmuster als das zweite Lichtverteilungsmuster bildet,
wobei das erste und zweite Lichtverteilungsmuster durch Rotieren des Blendenelements geschaltet werden, und
die Position des oberen Endes des ersten Lichtverteilungsmusters graduell bewegt wird, indem ein Rotationsmaß des Blendenelements graduell bewegt wird.

## Revendications

1. Appareil de phare avant (12) pour un véhicule (10), l'appareil de phare avant comprenant :
une pluralité d'unités de phare avant (20L, 20R) qui sont adaptées pour être agencées dans le véhicule, chacune des unités de phare avant étant adaptée pour projeter de la lumière en une pluralité de motifs de répartition comprenant un premier motif de répartition de lumière de feux de croisement (PL) et un second motif de répartition de lumière de feux de route (PH) ; et
une unité de commande (22) qui est configurée pour commander la pluralité d'unités de phare avant afin de projeter la lumière en fonction d'une distance à partir du véhicule jusqu'à un véhicule de devant,
**caractérisé en ce que**, si la distance est inférieure à une valeur seuil, l'unité de commande commande une position d'une extrémité supérieure du premier motif de répartition de lumière de sorte qu'elle se déplace progressivement vers le haut sur la base de l'augmentation de la distance et,
si la distance est supérieure à la valeur seuil, l'unité de commande forme le second motif de répartition de lumière qui éclaire une région comprenant une partie au-dessus du premier motif de répartition de lumière, et commande un éclairement du second motif de répartition de lumière de sorte que l'éclairement soit accru en fonction d'une augmentation de la distance.

2. Appareil de phare avant selon la revendication 1, dans lequel, quand la distance est égale à la valeur seuil, l'unité de commande commande la position de l'extrémité supérieure du premier motif de répartition de lumière de sorte qu'une ligne de coupure (CL1, CL2, CL3) de celui-ci corresponde à la ligne horizontale (H) qui traverse un axe optique (Ax) de la pluralité d'unités de phare avant.

3. Appareil de phare avant selon la revendication 1 ou 2, dans lequel
chacune de la pluralité d'unités de phare avant comprend :
une première unité de lampe (30) qui forme le premier motif de répartition de lumière de feux de croisement et une seconde unité de lampe (32) qui forme le second motif de répartition de lumière de feux de route, et
l'unité de commande (22) commande la pluralité d'unités de phare avant de telle sorte que si la distance est inférieure à la valeur seuil, l'unité de commande commande les premières unités de lampe de la pluralité d'unités de phare avant de sorte que la position du motif de répartition de lumière de feux de croisement se déplace progressivement vers la ligne horizontale en fonction de la distance ; et
si la distance est supérieure à la valeur seuil, l'unité de commande commande les secondes unités de lampe de la pluralité de phares avant pour former le motif de répartition de lumière de feux de route qui éclaire la région contenant la partie au-dessus du motif de répartition de lumière de feux de croisement, et commande les secondes unités de lampe de sorte qu'un éclairement du motif de répartition de lumière de feux de route augmente à mesure que la distance augmente.

4. Appareil de phare avant selon l'une des revendications 1 à 3, dans lequel l'unité de commande détermine la valeur seuil en fonction d'un environnement dans lequel le véhicule roule.

5. Procédé de commande pour commander un appareil de phare avant de véhicule comprenant une pluralité d'unités de phare avant, le procédé de commande étant **caractérisé en ce qu'**il comprend :
l'obtention d'une distance à partir du véhicule jusqu'à un véhicule de devant (S34) ;
si la distance est inférieure à une valeur seuil (S36), la commande de la pluralité d'unités de phare avant de sorte à déplacer progressivement une position d'une extrémité supérieure d'un motif de répartition de lumière de feux de croisement produit par les unités de phare avant vers le haut, sur la base d'une augmentation de la distance (S40), et
si la distance est supérieure à la valeur seuil (S36), la commande de la pluralité d'unités de phare avant pour modifier un éclairement d'un motif de répartition de lumière de feux de roue de sorte que l'éclairement soit accru en fonction d'une augmentation de la distance (S42).

6. Appareil de phare avant selon l'une des revendications 1 à 4, dans lequel chacune des unités de phare avant comprend :
une lentille de projection (142) ;
une ampoule à décharge (136) positionnée au niveau d'un point focal avant de la lentille de projection ;
un réflecteur (138) qui réfléchit la lumière émise à partir de l'ampoule à décharge ;
un élément d'écran rotatif (146) qui est disposé le long d'un axe horizontal s'étendant dans un sens de la largeur du véhicule, l'axe horizontal étant positionné au niveau d'un point focal arrière de la lentille de projection ; et
un élément d'écran fixe auxiliaire (148),
dans lequel l'élément d'écran comprend :
une surface périphérique externe formée sur une plage d'angle central d'environ 180 degrés par rapport à l'axe horizontal et qui forme un motif de répartition de lumière de feux de croisement en tant que le premier motif de répartition ; et
un renfoncement qui est formé dans la surface périphérique externe sur le reste de la plage d'angle central d'environ 180 degrés par rapport à l'axe horizontal et qui forme un motif de répartition de lumière de feux de route en tant que le second motif de répartition de lumière,
dans lequel les premier et second motifs de répartition de lumière sont commutés par rotation de l'élément d'écran, et
la position de l'extrémité supérieure du premier motif de répartition de lumière est déplacée progressivement par modification progressive d'une quantité de rotation de l'élément d'écran.
